# EUROPÄISCHE PATENTSCHRIFT

(11) **EP 0 915 266 B1**
(45) Veröffentlichungstag und Bekanntmachung des Hinweises auf die Patenterteilung: **06.05.2004**
(21) Anmeldenummer: 98118307.2
(22) Anmeldetag: 25.09.1998
(51) Int. Cl.: F16F 1/37, F16F 1/38, F16F 1/387, B60G 7/00, B60G 7/02

(54) **Augenlager und Verfahren zu dessen Herstellung**
Circular elastic bearing and its production method
Palier élastique circulaire et sa méthode de fabrication

(30) Priorität: 29.09.1997 DE 19742955
(43) Veröffentlichungstag der Anmeldung: 12.05.1999
(73) Patentinhaber: BASF AKTIENGESELLSCHAFT, 67056 Ludwigshafen (DE)
(72) Erfinder: Burlage, Thomas, 49134 Wallenhorst (DE); Giesen, Klaus, 49401 Damme (DE)
(74) Vertreter: Isenbruck, Günter

(56) Entgegenhaltungen:
- WO-A-91/17320
- WO-A-97/36120
- DE-A- 2 108 154
- DE-A- 2 237 516
- FR-A- 2 173 397
- US-A- 4 556 235
- US-A- 4 667 943
- PATENT ABSTRACTS OF JAPAN vol. 017, no. 439 (M-1462), 13. August 1993 & JP 05 096983 A (MITSUBISHI STEEL MFG CO LTD;OTHERS: 01), 20. April 1993

## Beschreibung

Augenlager werden in sehr großer Stückzahl in Straßenfahrzeugen eingesetzt. Ihre Aufgabe ist es, zwei Bauteile des Straßenfahrzeugs, zum Beispiel die Karosserie mit dem radführenden Querlenker elastisch miteinander zu verbinden. Die Verbindung ist dabei dergestalt, daß über das Augenlager Bewegungen zwischen den beiden Befestigungsteilen in den Hauptdreh- und/oder Haupttranslationsachsen ermöglicht werden.

DE-A 2 237 516 betrifft ein torsionselastisches Federungselement mit einem Hohlkörper und einem darin untergebrachten und gegenüber diesem um seine Längsachse drehbaren Drehkörper. Ferner enthält das Federungselement einen zwischen dem Hohlkörper und dem Drehkörper angeordneten, mit beiden Körpern verbundenen und den Hohlraum zwischen diesen Körpern in radialer Richtung ausfüllenden Federkörper.

Aus dem Fachbuch von Jörnsen Reimpell, "Fahrwerkstechnik", Würzburg, 3. Auflage 1995, Vogel Verlag, Seite 195, Abb. 3.85 ist ein Augenlager bekannt, das zur Ermöglichung der Bewegungen einen zwischen einem rohrförmigen inneren Gehäuse und einem äußeren Rohrabschnitt angeordneten Federkörper aus Gummi aufweist. Durch die Elastizität des Federkörpers findet bei einer entsprechenden Krafteinleitung eine elastische Verformung des Federkörpers statt. Gleichzeitig wird die Werkstoffdämpfung des Gummis für eine Dämpfung des schwingungsfähigen Systems ausgenutzt.

Weiterhin weist das bekannte Augenlager zwei von der radialen Richtung abhängige unterschiedliche Kraft-Verformungskurven auf. Um dieses unterschiedliche Verhalten bei dem an sich im Querschnitt kreisrunden Augenlager zu erreichen, sind im Federkörper partielle Ausnehmungen vorgesehen, die einen größeren Verformungsweg ermöglichen. Der Federkörper des bekannten Augenlagers läßt aufgrund der Elastizität seines Werkstoffes zudem auch Verformungen in axialer Richtung zu und erlaubt daher eine Verschiebung des äußeren Rohrabschnitts gegenüber dem inneren Gehäuse.

Augenlager der beschriebenen Art werden durch Einpressen (Kalibrieren) mit dem aufnehmenden Bauteil verbunden. Dabei ist im aufnehmenden Bauteil eine Einpreßbuchse vorhanden, deren Innendurchmesser geringfügig kleiner als der Außendurchmesser des äußeren Rohrabschnitts des Augenlagers ist. Die beim Einpressen notwendige Stauchung des Augenlagers wird durch die elastische Verformung des elastomeren Werkstoffs möglich. Durch diese Verformung wird im äußeren Rohrabschnitt eine ständige Vorspannkraft bewirkt, die den festen Sitz des Augenlagers in der Einpreßbuchse sicherstellt.

Augenlager der beschriebenen Art haben trotz ihrer weiten Verbreitung insbesondere den Nachteil, daß sich der für die Augenlager verwendeten kompakten elastomeren Werkstoffe wie Gummi nur wenig verformen lassen. Ihr Verformungsweg beträgt, in Abhängigkeit von der Art des verwendeten elastomeren Werkstoffs, nur ein Viertel bis ein Drittel der Dicke des elastomeren Werkstoffs. Eine Vergrößerung des Verformungsweges durch die oben beschriebenen Ausnehmungen ist dabei nur partiell anwendbar. Um größere Verformungswege der Augenlager zu ermöglichen, muß die Dicke des elastomeren Werkstoff vergrößert werden, was wiederum die Abmessungen des Augenlagers vergrößert. Zur Einsparung von Bauraum in der kompakten Bauweise moderner Straßenfahrzeuge sind aber Bauteile mit reduzierten Abmessungen erwünscht.

Weiterhin ist Lebensdauer der Augenlager in der beschriebenen Art oft durch das Versagen der Haftung des elastomeren Werkstoffs an dem äußeren Rohrabschnitt und dem inneren Gehäuse bestimmt. Die Herstellung dieser flächigen Verbindung im Vulkanisierprozeß bedeutet großen Aufwand für die Vorbehandlung der Fügeflächen durch Entfetten und Auftrag von Haftvermittlern. Die nur flächige Verbindung durch Haftschluß erreicht oft nur Festigkeiten, die unter der Eigenfestigkeit des elastomeren Werkstoffs liegen. Zur Verlängerung der Lebensdauer der Augenlager sind aber Verbindungen des elastomeren Werkstoffs mit den anliegenden Bauteilen erwünscht, die die Lebensdauer nicht begrenzen.

Der vorliegenden Erfindung liegt die Aufgabe zugrunde, ein Augenlager mit größerem Verformungsweg bei kleineren Abmessungen sowie ein Verfahren zur Herstellung eines derartigen Augenlagers bereitzustellen.

Gemäß der Erfindung besteht der Federkörper aus einem zelligen elastomeren Werkstoff. Das erfindungsgemäße Augenlager hat gegenüber dem zuvor beschriebenen Augenlager des Standes der Technik den Vorteil, daß sich der verwendete zellige elastomere Werkstoff sehr viel mehr als ein kompakter elastomerer Werkstoff stauchen läßt. Bei Einhaltung gleicher Verformungswege des Augenlagers mit einem Federkörper aus einem kompakten elastomeren Werkstoff können die unter Verwendung eines Federkörpers aus einem zelligen elastomeren Werkstoffs gefertigten Augenlager entsprechend kleiner ausgeführt werden.

Die Dichte des zelligen elastomeren Werkstoffes des erfindungsgemäßen Augenlagers liegt zwischen 300 kg/m³ und 700 kg/m³, wobei das Porenvolumen 65% bei der geringen und 40% bei der hohen Dichte beträgt, so daß die erreichbare maximale Stauchung für die geringe Dichte bei etwa 80% der unbelasteten Dicke, bei der hohen Dichte bei etwa 60% unbelasteten Dicke liegt.

Zur Erhöhung der Verbundfestigkeit des Federkörpers mit dem äußeren Rohrabschnitt wird vorzugsweise zwischen dem Federkörper aus elastomeren Werkstoff und dem äußeren Rohrabschnitt mittels Durchbrechungen in dem äußeren Rohrabschnitt, welche mit dem zelligen elastomeren Werkstoff gefüllt sind, ein Formschluß hergestellt. Durch diese Maßnahme läßt sich eine Verbundfestigkeit erreichen, die so hoch ist wie die Eigenfestigkeit des elastomeren Werkstoffs selbst. Damit wird die Lebensdauer des Augenlagers nicht mehr durch die Verbindung des Federkörpers mit dem äußeren Rohrabschnitt begrenzt.

Dadurch, daß der äußeren Rohrabschnitt auf seiner Außenfläche Stege aufweist und daß der Zwischenraum zwischen zwei benachbarten Stegen mit dem zelligen elastomeren Werkstoff des Federkörpers zumindest teilweise ausgefüllt ist, wird der Formschluß erhöht und die Verbundfestigkeit weiter verbessert.

Gemäß einer Weiterbildung weist das Augenlager eine richtungsabhängige radiale Federungs- und Dämpfungscharakteristik auf. Dies wird dadurch erreicht, daß die Dicke des Federkörpers zwischen dem. inneren Gehäuse und dem äußeren Rohrabschnitt in mindestens zwei radialen Richtungen unterschiedlich ist. Diese Dickenänderung kann durch eine Änderung der Außenkontur des inneren Gehäuses oder durch einen radialen Versatz desselben erreicht werden.

Vorzugsweise ist die Dichte des aus elastomeren Werkstoff bestehenden Federkörpers so gewählt, daß der Verformungsweg ein Halb bis zwei Drittel der Dicke des Federkörpers beträgt. Dabei wird von einer Last ausgegangen, die bei der bestimmungsgemäßen Anwendung auftritt.

Das erfindungsgemäße Verfahren zur Herstellung eines vorgenannten Augenlagers umfaßt die Merkmale von Anspruch 5.

Zur Verbesserung der Verbundfestigkeit kann das Verfahren derart weitergebildet werden, daß der Werkstoff während des Aufschäumens Durchbrechungen des äußeren Rohrabschnitts durchdringt und sich dabei mit dem äußeren Rohrabschnitt durch Formschluß verbindet.

Eine weitere Verbesserung der Verbundfestigkeit wird dadurch erreicht, daß der Werkstoff während des Aufschäumens einen Zwischenraum zwischen Stegen zumindest teilweise ausfüllt.

Vorteilhafterweise wird das Verfahen so geführt, daß sich mit der Polymerbildung eine Dichte des zelligen elastomeren Werkstoffs einstellt die derart ist, daß der Verformungsweg des Federkörpers unter Last ein Halb bis zwei Drittel seiner Dicke beträgt.

In der Zeichnung ist ein Ausführungsbeispiel eines Augenlagers gemäß der Erfindung dargestellt.

Es zeigt die:
- Fig. 1: einen Längsschnitt durch ein Augenlager und die
- Fig. 2: einen Querschnitt durch das Augenlager aus Fig. 1.

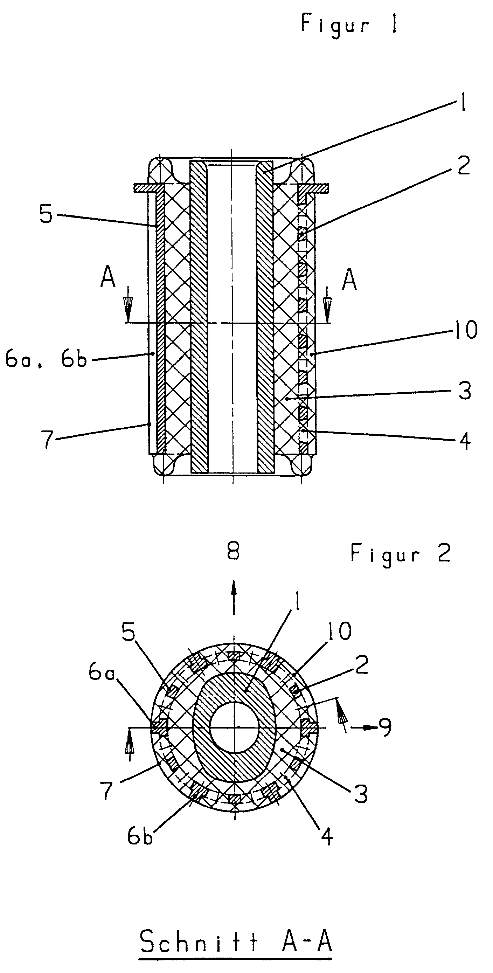

Das in Fig. 1 dargestellte Augenlager besteht aus einem inneren Gehäuse 1 und einem äußeren Rohrabschnitt 2, die beide durch einen Federkörper 3 aus einem zelligen elastomeren Werkstoff miteinander verbunden sind.

Als Werkstoff kommt bevorzugt ein Polyurethan-Elastomer zum Einsatz. Derartige Elastomere sind an sich bekannt. Sie entstehen durch Reaktionen von Polyhydroxylkomponenten (Polyester oder Polyether) mit Diisycyanaten und anschließender Umsetzung mit einem Vernetzungsmittel. Das Vernetzungsmittel ist Wasser. Bei der chemischen Reaktion entsteht unter anderem Kohlendioxyd, das die Zellbildung des Elastomers bewirkt.

Der äußere Rohrabschnitt 2 ist gelocht und weist daher Durchbrechungen 4 auf. Auf seiner Außenseite 5 sind Stege 6a, 6b angeordnet, die bis zu einem Außenumfang 7 des Augenlagers reichen. Die Durchbrechungen 4 sind vollständig vom Werkstoff des Federkörpers 3 ausgefüllt, sodaß hier eine formschlüssige Verbindung vorliegt.

In Fig. 2 ist das Augenlager im Querschnitt dargestellt. Das innere Gehäuse 1 hat einen vom Kreis abweichenden elliptischen Querschnitt. Gundsätzlich sind aber auch kreisrunde oder sogar eckige Querschnitte vorstellbar. Durch die vom Kreis abweichenden Querschnitte werden in unterschiedlichen radialen Richtungen 8, 9 des Augenlagers unterschiedliche Dicken des Federkörpers 3 zwischen dem inneren Gehäuse 1 und dem äußeren Rohrabschnitt 2 erreicht.

Da der Betrag der möglichen Stauchung des elastomeren Werkstoffs von seiner Dicke abhängig ist, treten durch die unterschiedlichen Dicken in den unterschiedlichen radialen Richtungen bei sonst gleichen äußeren Belastungen unterschiedliche Verformungen des Augenlagers auf. Die neben dem bevorzugt eliptischen Querschnitt des inneren Gehäuses 1 auch möglichen eckigen Querschnitte haben vorzugsweisen die Form eines Rechtecks, dessen Ecken zur Vermeidung von Spannungsspitzen abgerundet werden.

Damit der Verformungsweg des Federkörpers 3 ein Halb bis zwei Drittel seiner Dicke beträgt, ist eine entsprechende Dichte des zelligen Werkstoffs auszuwählen.

Das für den Federkörper 3 verwendete Polyurethan-Elastomer hat als zelliges Material Dichten zwischen 300 kg/m³ und 700 kg/m³. Dabei beträgt sein Porenvolumen 65% bei der geringen und 40% bei der hohen Dichte. Dem entsprechend läßt sich dieser zellige elastomere Werkstoff auch unterschiedlich stark stauchen. Die erreichbare maximale Stauchung liegt für die geringe Dichte bei etwa 80% der unbelasteten Dicke, bei der hohen Dichte ist eine Verformung bis zu etwa 60% der unbelasteten Dicke möglich.

Das die Stauchung des zelligen elastomeren Werkstoffs vorrangig eine Kompression des in den Zellen vorhandenen Gases bewirkt, ist die Verformung auch dann nicht wesentlich behindert, wenn der zellige elastomere Werkstoff wie hier als Federkörper 3 zwischen dem inneren Gehäuse 1 und dem äußeren Rohrabschnitt 2 in einem geschlossenen Umfeld angeordnet ist.

Die Stege 6 sind Bestandteil des Außenumfangs 7, wobei der Zwischenraum 10 zwischen den Stegen 6a, 6b mit dem elastomeren Werkstoff des Federkörpers ausgefüllt ist.

Das Augenlager wird durch ein Einpressen (Kalibrieren) im aufnehmenden Bauteil, einer nicht dargestellten Buchse, besfestigt. Die dazu vorgesehene Buchse ist gegenüber dem Augenlager ein Untermaß in der Größenordnung von 2 bis 10% des Außendurchmessers des Augenlagers. Durch die Stauchung des Augenlagers wird eine Vorspannung im elastomeren Federkörper 3 bewirkt, die den Haftsitz des Augenlagers in der Buchse gewährleistet. Das Einpressen des Augenlagers in die Einpreßbuchse wird durch die Stege 6a, 6b erleichtert. Die Stege 6a, 6b wirken wie Gleitleisten, an denen entlang das Augenlager in die Einpreßbuchse gleiten kann. Durch das Übermaß auch der Stege 6a, 6b gegenüber dem Augenlager wird der äußere Rohrabschnitt 2 gestaucht. Die hier vorliegende haft- oder reibschlüssige Verbindung an der Buchse verkraftet die mechanischen Belastungen besser als eine Verbindung aus dem Gehäuse , da die Verbindungsfläche deutlich größer ist.

Ein erfindungsgemäßes Augenlager läßt sich dadurch herstellen, daß das innere Gehäuse 1 und der äußere Rohrabschnitt 2 in ihrer Solllage in einem Werkzeug positioniert werden. Danach wird der im Verarbeitungszustand noch flüssige elastomere Werkstoff in das Werkzeug gefüllt, und dieses wird druckfest geschlossen. In dem dann stattfinden chemischen Prozeß der Polymerbildung und des Schäumens durchdringt der elastomere Werkstoff die Löcher 4 des äußeren Rohrabschnitts 2 und verbindet sich mit diesem festhaftend durch einen Formschluß unter Ausbildung eines Federkörpers 3.

Auch der Zwischenraum 10 zwischen zwei Stegen 6a, 6b wird von dem durch die Durchbrechungen 4 tretenden flüssigen Werkstoff ebenfalls ausgefüllt, sodaß der Außenumfang 7 des äußeren Rohrabschnitt 2 bis auf die Stege 6a, 6b vom zelligen Werkstoff des Federkörpers 3 umschlossen ist.

## Patentansprüche

1. Augenlager, aufweisend ein rohrförmiges inneres Gehäuse (1), einen äußeren Rohrabschnitt (2) und einen diese verbindenden elastisch nachgiebigen Federkörper (3) aus einem zelligen elastomeren Werkstoff, **dadurch gekennzeichnet, daß** die Dichte des zelligen elastomeren Werkstoffes zwischen 300 kg/m³ und 700 kg/m³ liegt, wobei das Porenvolumen 65% bei der geringen und 40% bei der hohen Dichte beträgt, so daß die erreichbare maximale Stauchung für die geringe Dichte bei etwa 80% der unbelasteten Dicke, bei der hohen Dichte bei etwa 60% der unbelasteten Dicke liegt.

2. Augenlager nach Anspruch 1, **dadurch gekennzeichnet, daß** der äußere Rohrabschnitt (2) Durchbrechungen (4) aufweist, welche mit dem zelligen elastomeren Werkstoff gefüllt sind.

3. Augenlager nach Anspruch 2, **dadurch gekennzeichnet, daß** der äußere Rohrabschnitt (2) auf seiner Außenfläche (5) Stege (6) aufweist und daß der Zwischenraum (10) zwischen zwei benachbarten Stegen (6a, 6b) mit dem zelligen elastomeren Werkstoff des Federkörpers (3) zumindest teilweise ausgefüllt ist.

4. Augenlager nach einem der Ansprüche 1 bis 3, **dadurch gekennzeichnet, daß** die Dicke des Federkörpers (3) zwischen dem inneren Gehäuse (1) und dem äußeren Rohrabschnitt (2) in mindestens zwei radialen Richtungen (8, 9) unterschiedlich ist.

5. Verfahren zur Herstellung eines Augenlagers nach einem der Ansprüche 1 bis 4, bei dem ein inneres Gehäuse (1) und ein äußerer Rohrabschnitt (2) in einem Werkzeug positioniert und festgehalten werden, bei dem in das Werkzeug ein flüssiger Werkstoff gefüllt wird, daß das Werkzeug druckfest geschlossen wird und der flüssige Werkstoff in einem chemischen Prozeß der Polymerbildung aufschäumt, wodurch ein elastisch nachgiebiger Federkörper (3) aus einem zelligen elastomeren Werkstoff entsteht, der mit dem inneren Gehäuse (1) und dem äußeren Rohrabschnitt (2) fest verbunden ist und wobei die Dichte des zelligen. elastomeren Werkstoffes zwischen 300 kg/m³ und 700 kg/m³ liegt, und das Porenvolumen 65 % bei der geringen und 40 % bei der hohen Dichte beträgt, so dass die erreichbare maximale Stauchung für die geringe Dichte bei etwa 80 % der unbelasteten Dicke, bei der hohen Dichte bei etwa 60 % der unbelasteten Dicke liegt.

6. Verfahren zur Herstellung eines Augenlagers nach Anspruch 5, **dadurch gekennzeichnet, daß** der Werkstoff während des Aufschäumens Durchbrechungen (4) des äußeren Rohrabschnitts (2) durchdringt und sich dabei mit dem äußeren Rohrabschnitt (2) durch Formschluß verbindet.

7. Verfahren zur Herstellung eines Augenlagers nach Anspruch 5, **dadurch gekennzeichnet, daß** der Werkstoff während des Aufschäumens einen Zwischenraum (10) zwischen Stegen (6a, 6b) zumindest teilweise ausfüllt.

## Claims

1. An eye-type bearing, having a tubular inner housing (1), an outer section of tube (2) and an elastically compliant spring element (3) connecting the latter and made of a cellular elastomeric material, **characterized in that** the density of the cellular elastomeric material lies between 300 kg/m³ and 700 kg/m³, the pore volume being 65% in the case of the low density and 40% in the case of the high density, so that the achievable maximum compression is approximately 80% of the unloaded thickness for the low density, approximately 60% of the unloaded thickness in the case of the high density.

2. An eye-type bearing as claimed in claim 1, wherein the outer section of tube (2) has openings (4) which are filled with the cellular elastomeric material.

3. An eye-type bearing as claimed in claim 2, wherein the outer section of tube (2) has fillets (6) on its outer surface (5) and wherein the intermediate space (10) between two neighboring fillets (6a, 6b) is at least partially filled with the cellular elastomeric material of the spring element (3).

4. An eye-type bearing as claimed in one of claims 1 to 3, wherein the thickness of the spring element (3) between the inner housing (1) and the outer section of tube (2) is different in at least two radial directions (8, 9).

5. A process for the production of an eye-type bearing as claimed in one of claims 1 to 4, in which an inner housing (1) and an outer section of tube (2) are positioned and securely held in a mold, in which the mold is filled with a liquid material and in which the mold is closed in a pressure-resistant manner and the liquid material is expanded in a chemical process of polymerization, thereby producing an elastically compliant spring element (3) made of a cellular elastomeric material which is securely connected to the inner housing (1) and the outer section of tube (2) and the density of the cellular elastomeric material lying between 300 kg/m³ and 700 kg/m³, and the pore volume being 65% in the case of the low density and 40% in the case of the high density, so that the achievable maximum compression is approximately 80% of the unloaded thickness for the low density, approximately 60% of the unloaded thickness in the case of the high density.

6. A process for the production of an eye-type bearing as claimed in claim 5, wherein, during the expansion, the material penetrates through openings (4) in the outer section of tube (2) and thereby bonds with the outer section of tube (2) by interlocking.

7. A process for the production of an eye-type bearing as claimed in claim 6, wherein, during the expansion, the material at least partially fills an intermediate space (10) between fillets (6a, 6b).

## Revendications

1. Palier fermé comprenant un boîtier (1) intérieur de forme tubulaire, une section de tube (2) extérieure et un corps à ressort (3) souple au plan élastique et reliant ces éléments, à base d'un matériau élastomère cellulaire, **caractérisé en ce que** la densité du matériau élastomère cellulaire se situe entre 300 kg/m³ et 700 kg/m³, le volume poreux représentant 65 % avec la faible densité et 40 % avec la densité élevée, de sorte que le refoulement maximal pouvant être obtenu est d'environ 80 % de l'épaisseur non chargée pour la faible densité et d'environ 60 % de l'épaisseur non chargée pour la densité élevée.

2. Palier fermé selon la revendication 1, **caractérisé en ce que** la section de tube (2) extérieure présente des percements (4) qui sont remplis avec le matériau élastomère cellulaire.

3. Palier fermé selon la revendication 2, **caractérisé en ce que** la section de tube (2) extérieure présente des nervures (6) sur sa surface extérieure (5) et **en ce que** l'interstice (10) entre deux nervures (6a, 6b) voisines est rempli au moins partiellement avec le matériau élastomère cellulaire du corps à ressort (3).

4. Palier fermé selon l'une quelconque des revendications 1 à 3, **caractérisé en ce que** l'épaisseur du corps à ressort (3) entre le boîtier (1) intérieur et la section de tube (2) extérieure est différente dans au moins deux directions (8, 9) radiales.

5. Procédé pour la fabrication d'un palier fermé selon l'une quelconque des revendications 1 à 4, avec lequel un boîtier (1) intérieur et une section de tube (2) extérieure sont positionnés et maintenus dans un moule, avec lequel un matériau liquide est versé dans le moule de telle sorte que l'outil est fermé de façon résistante à la pression et le matériau liquide mousse dans un procédé chimique de formation de polymère, par lequel un corps à ressort (3) élastiquement souple se forme à partir d'un matériau élastomère cellulaire, qui est relié de façon fixe avec le boîtier (1) intérieur et la section de tube (2) extérieure et la densité du matériau élastomère cellulaire étant comprise entre 300 kg/m³ et 700 kg/m³, et le volume poreux représentant 65 % avec la densité faible et 40 % avec la densité élevée, de sorte que le refoulement maximal que l'on peut obtenir représente environ 80 % de l'épaisseur non chargée pour la faible densité et environ 60 % de l'épaisseur non chargée pour la densité élevée.

6. Procédé pour la fabrication d'un palier fermé selon la revendication 5, **caractérisé en ce que** le matériau pénètre pendant le moussage des percements (4) de la section de tube (2) extérieure et s'associe alors avec la section de tube (2) extérieure par liaison avec conjugaison de formes.

7. Procédé pour la fabrication d'un palier fermé selon la revendication 5, **caractérisé en ce que** le matériau remplit au moins partiellement pendant le moussage un interstice (10) entre des nervures (6a, 6b).
